# EUROPEAN PATENT SPECIFICATION

(11) **EP 1 170 191 B1**
(45) Date of publication and mention of the grant of the patent: **07.06.2006**
(21) Application number: 01850115.5
(22) Date of filing: 02.07.2001
(51) Int. Cl.: B62B 3/06, B60L 1/00

(54) **Device for electric components at an industrial truck**
Vorrichtung für elektrische Bauteile eines Förderfahrzeuges
Dispositif pour composants électriques d'un chariot de manutention

(30) Priority: 05.07.2000 SE 0002560
(43) Date of publication of application: 09.01.2002
(73) Proprietor: BT Industries Aktiebolag, S-59581 Mjölby (SE)
(72) Inventor: Lunden, Mats, 59533 Mjölby (SE); Wernborg, Sven-Eric, 59532 Mjölby (SE); Larsson, Tomas, 59132 Motala (SE)
(74) Representative: Berglund, Erik Wilhelm

(56) References cited:
- US-A- 2 254 331
- US-A- 5 520 258

## Description

This invention concerns a device with electric components for an industrial truck in accordance with the preamble of patent claim 1, such as shown by US-A-5 520 258.

### Prior art.

The industrial trucks driven by electrical motors that are used in different material handling situations become more and more advanced and refined. This means for instance that the number of electrical control functions, and with this accompanying components, tends to grow. At the same time one wish the dimensions of the truck to be minimized with regard among other things to the maneuverability in narrow areas. This may lead to a lack of space for components in the truck and that problems may rise when it comes to the arrangement of these components in an efficient manner.

It is not only the question of physically having sufficient space for the components in or on the truck. It is also important that the design is satisfactory from many other views. For instance the electric components should be arranged systematically to facilitate at fault diagnose, service maintenance and to enable an efficient simple assembly process.

It is important that an economically totally advantageous solution is obtained since the cost issue is extremely important for these products. In particular for smaller tiller controlled trucks with a walking operator the problems are evident since these trucks have little available space, in particular those with battery charger inboard, and greater difficulties to carry the extra costs in relation to the bigger machines.

On these smaller trucks it may also be problematic to find suitable locations for controls that the driver need to have easily accessibly, as for instance starting lock and emergency breaker, where mounting and cable arranging can be executed with desirable simplicity.

### Object of the invention.

The object of the invention is to achieve a device or an arrangement of electrical components that provide a simple, cost efficient and compact solution with a regard to construction, mounting and possibility to service.

### Brief statement of the invention.

The object of the invention is achieved with a device in accordance with the characterizing clause of claim 1. By arranging electric components, including the comparatively space requiring components motor control unit and battery charger as well drivers controls on a common support panel that requires little space, these can be mounted in advance which provides simple final mounting, and these can be placed comparatively easily accessible for service and maintenance.

The claims 2 and 3 define the components that with great advantage can be located on the support panel and a preferred way to fasten them to this that enables good interrelated orientation and enables optimized placing of the cables.

The claims 4 and 5 define preferred embodiments for location on a tiller truck, were the space is used optimally and where the controls are arranged in a practical way for the availability for the operator.

The device according to the claims 6 - 8 enables good availability and service possibility at the application on a tiller truck including a fast demounting of surrounding main parts and availability for the electric components without these having to be disconnected.

Further the characteristics and advantages of the invention are apparent from the following described preferred embodiment referring to the enclosed figures.

### Figures.

Fig 1 shows a tiller truck seen from above.
Fig 2 shows a perspective view of a tiller truck chassi.
Fig 3 shows a perspective view of a support panel in accordance with the invention.

### Description of embodiment.

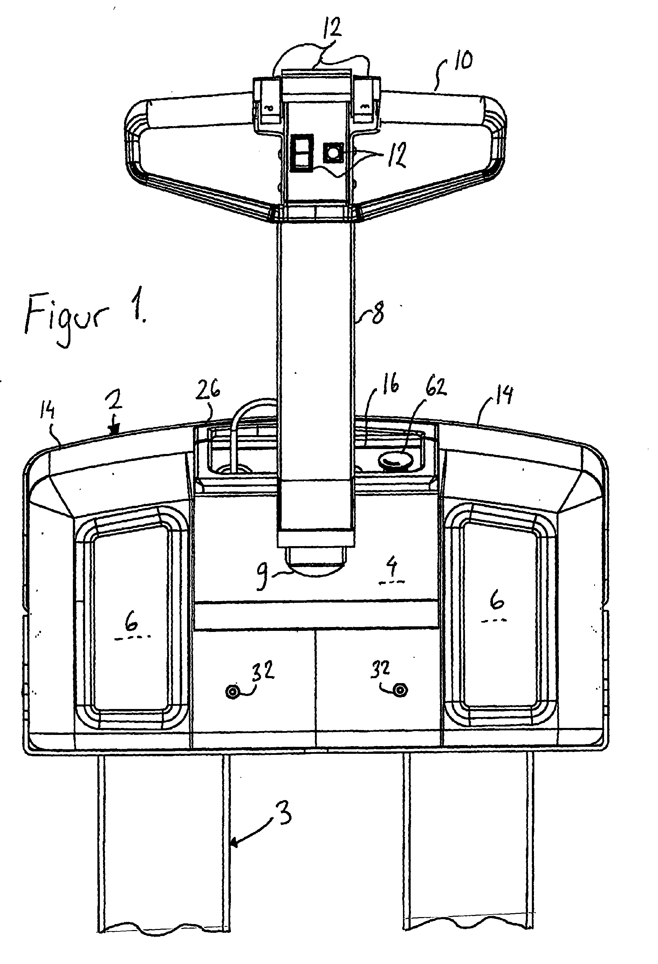

Fig 1 shows a tiller truck provided with a device in accordance with invention. The truck includes a chassi 2 and load taking means 3 in the shape of a pair of load forks.

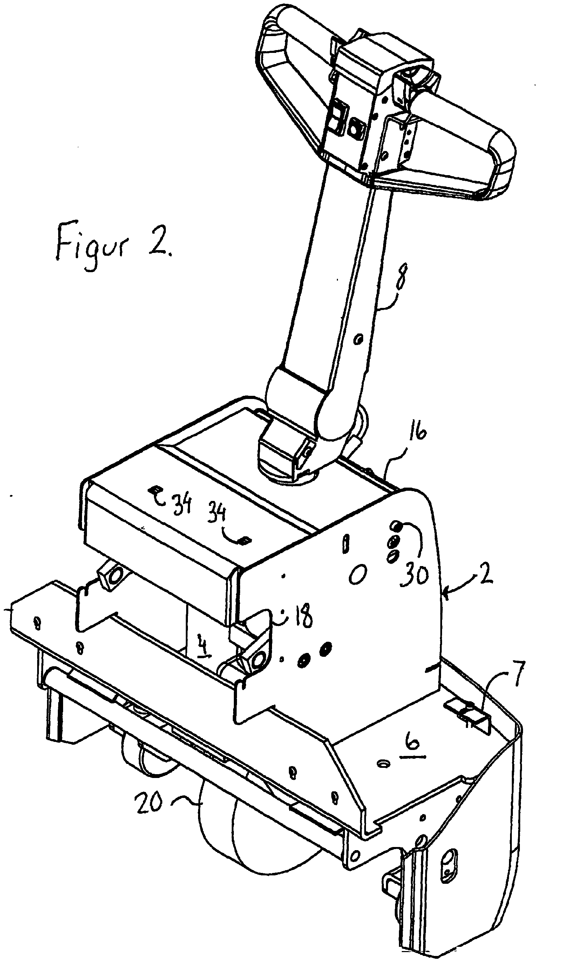

The design of the chassi 2 is apparent from the figures 1 and 2. The chassi 2 includes a central space 4 where among other an electric drive motor 18 is arranged connected to a drive wheel 20. On each side of the central space 4 a battery space 6 is arranged were a battery unit (not shown) is fastened by means of among other things the flange 7. The truck thus includes two battery units. The battery reception spaces 6 are covered by a respective hood part 14 fastened to the chassi with a screw connection 32, 34.

The operator maneuvers the truck by means of a tiller 8 journalled at 9 close to the central space 4. A handle 10 is arranged at the tiller 8 where a number of controls 12 for maneuvering the truck are arranged, as speed, travel direction, lifting/lowering and signal controls.

The above mentioned design is essentially known already even if details solutions may differ somewhat. Our invention is based on the arrangement of electric components which is described in greater detail below.

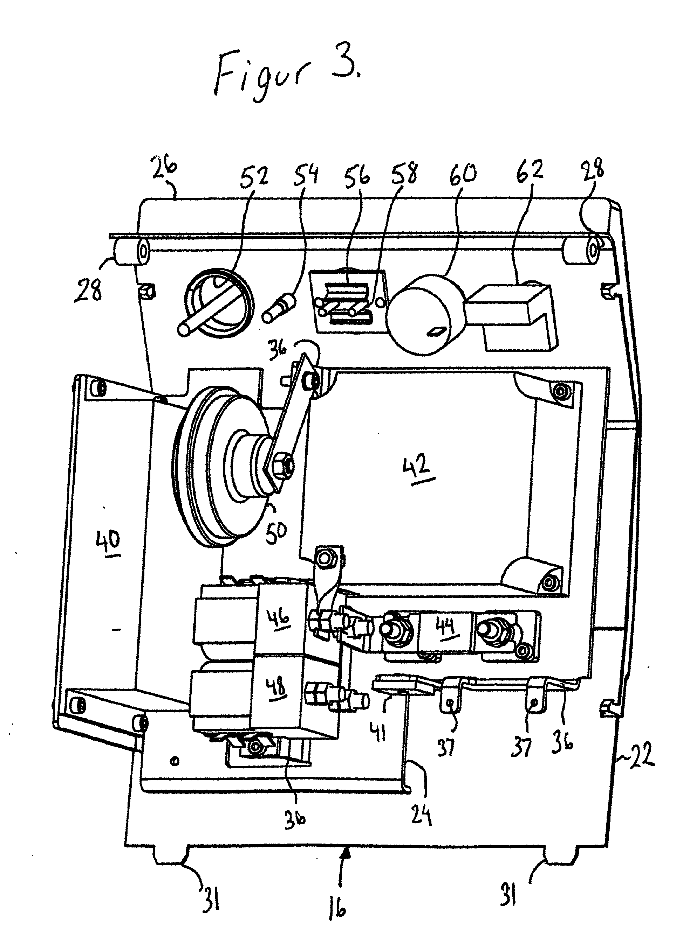

In accordance with the invention a support panel 16 is arranged on the chassi 2. As is apparent from the figures 1 and 2 the support panel 16 is arranged close to the central space 4 and facing the place of the operator. Essentially all electric components are fastened to the support panel 16. The support panel in itself with the mounted components is shown in fig 3 while the cables have been omitted for better clarity. The components are however connected in the normal fashion.

The support panel 16 thus includes a basic part 22 in sheet material with a fastening panel 24 welded to this and on which the components are fastened. Furthermore the side facing the operator is provided with a cover panel 26 in order to provide, in corporation with the hood parts 14, an aesthetic outer shape. To an upturned (alternately welded) lateral flange a battery charger 40 is arranged. On the fastening panel 24 a fuse 41 for the battery charger 40, a control unit for the drive unit (motor control unit) 42, a main fuse 44, a coupling means (not shown) for the reception of signal leads from the tiller 8 and the controls 12 arranged on this are fastened to the holes 37, a main contact 46, a contact 48 for a lifting device (pump for hydraulic lifting of load forks) and a signal horn 50 are arranged.

Several of the components are by means of screw connections fastened to upturned flanges 36 on the fastening panel 24. This arrangement means that it is more simple to locate the components in an advantageous way, at the same time as the length of the cables can be reduced. The location of the cables is also simplified since a space between the components and the fastening panel is made available.

To the upper part of the support panel 16 a number of components are mounted on the side facing the operator, that is the opposite side in relation to the above mentioned components. These parts are a passage opening 52 for the cable between battery charger 40 and a current source at battery charging, an indicating lamp 54 for the charging condition of the battery charger 40, the start blocking 56 in which a charge contact 58 is arranged, a start lock 60 and an emergency switch 62. At battery charging the charging contact 58 is placed in a current source outlet at which the start lock is disconnected making driving impossible. The start lock 56 is in a known manner coupled in a series with the starting lock 60 and the emergency switch 62, which thus provide the same function. The controls and indication means 52, 54, 56, 58, 60, 62 are accessable via an opening in the cover panel 26.

The invention brings a particularly simple and therefor cost efficient mounting method. All electric components and controls with cables can be premounted to the support panel 16. At the final mounting only the motor control unit 42 has to be connected to battery and drive motor 18 and a set of leads from the tiller connected in the contact. Thereafter the support panel 16 is quite simply mounted to the chassi 2 by the flanges 31 being inserted into cooperating recesses in the chassi 2 whereafter the support panel is secured by means of screws 30 in the recesses 28. Thereafter the hood parts 14 are mounted and secured by means of the screw connections 32, 34.

At service, maintenance and repairs it is possible to release the hood parts 14 and the support panel 16 without having to disconnect the electric connections. This enables fast work and at the same time checking of the functions.

The invention brings a very advantageous solution as concerns location of controls and electric components. The controls that the operator has to use continuously are in the normal way arranged in the control handle, while remaining controls and possible visual indication means are arranged easily accessible and on the same unit as the electric components with which they cooperate.

The invention can within the frame of the patent claims be embodied in accordance with a number of alternate embodiments other then the above shown. Thus its is possible if particular reasons are present to choose to arrange some components or controls at some other location on the support panel, even if it in itself probably means a more complicated mounting proceeder.

Furthermore of course the shape and material of the support panel can be varied and additional components may be arranged on the panel and their relative location can be varied.
For instance several indication means may be present with different shape and information picture. The invention is of course applicable on other types of trucks with other steering controls or means than tiller trucks. The support panel should advantageously be placed so that the controls or means used by the operator are located facing the location of the operator with remaining components located on other side protected behind the support panel.

## Claims

1. Device with electric components for an industrial truck driven by an electric motor, wherein the major part of all electric components (40, 41, 42, 44, 46, 48, 50) including at least a control unit (42) for a drive motor is arranged on a common support panel (16) at which also at least one of the operator maneuverable control or means (52, 56, 58, 60, 62) as well as a start lock (60) and an emergency switch (62) and/or a charge contact (58) are directly arranged, **characterised in that** also a battery charger (40) is arrranged on the support panel (16).

2. Device according to claim 1, **characterized in that** the battery charger (40), the control unit (42) for the drive motor, a main contact (46), a contact (48) for a lifting device, a signal horn (50), a main fuse (44), a coupling means for the reception of signal leads from a control means as a tiller arm, the start lock (60), the emergency switch (62) and the charge contact (52) are arranged directly at the support panel.

3. Device according to any of the claims 1 or 2, **characterized in that** the support panel (16) includes the fastening panel (24) with upturned flanges (36) to which electric components (41, 44, 46, 48, 50) are mounted.

4. Device according to any of the claims 1 - 3, **characterized in that** the support panel (16) is able to be arranged on a tiller truck at the end facing the place of the operator, and so that the controls or means (52, 56, 58, 60, 62) maneuverable by the operator and possible visual indication means (54) are arranged on one side of the support panel (16) facing the place of the operator and that the other components (40, 42, 44, 46, 48, 50) are arranged protected on a side of the support panel (16) facing away from the place of the operator.

5. Device according to any of the claims 1 - 4, **characterized in that** the support panel (16) and a journaling (9) for the tiller (8) are able to be arranged on the chassi (2) of a tiller truck between the place of the operator and the load taking means (3) and that a battery unit can be arranged on each side (6) of the mentioned journaling (9).

6. Device according to any of the claims 1 - 5, **characterized in that** the support panel (16) can be simply removably arranged at the chassi, for instance by a simple screw connection (28, 30), and surrounded by one or several simply removable arranged hood parts (14) with opening or recesses to enable access of controls or means (52, 56, 58, 60, 62) maneuverable by the operator and the possible visual indication means (54).

7. Device according to claim 7, **characterized in that** the support panel (16) includes a cover panel (26) that is able to cooperate with the hood parts (14) in order to achieve an aesthetic outer shape.

8. Device according to any of the claims 6 or 7, **characterized in that** the support panel (16) is arranged so that access to the electric components for maintenance, repairs, and service is possible with remaining electric contacts so that all functions remain when the hood parts (14) are removed.

## Patentansprüche

1. Vorrichtung mit elektrischen Komponenten für ein Flurförderzeug, welches mittels eines Elektromotors angetrieben ist, wobei der Hauptteil aller elektrischen Komponenten (40, 41, 42, 44, 46, 48, 50) einschließlich wenigstens einer Steuereinheit (42) für einen Antriebsmotor auf eine gemeinsame Tragplatte (16) angeordnet ist, an der auch wenigstens eine von einer Bedienungsperson betätigbare Steuereinrichtung oder eine Einrichtung (52, 56, 58, 60, 62) sowie ein Startschloss (60) und ein Notschälter (62) und/oder ein Ladekontakt (58) direkt angeordnet sind, **dadurch gekennzeichnet, dass** auch eine Batterieladeeinrichtung (40) auf der Tragplatte (16) angeordnet ist.

2. Vorrichtung nach Anspruch 1, **dadurch gekennzeichnet, dass** die Batterieladeeinrichtung (40), die Steuereinheit (42) für den Antriebsmotor, ein Hauptkontakt (46), ein Kontakt (48) für eine Hubeinrichtung, ein Signalhorn (50), eine Hauptsicherung (44), eine Verbindungseinrichtung zur Aufnahme der Signalleitungen von einer Steuereinrichtung in Form eines Lenkarms, das Startschloss (60), der Notschalter (62) und der Ladekontakt (52) direkt auf der Tragplatte (16) angeordnet sind.

3. Vorrichtung nach einem der Ansprüche 1 oder 2, **dadurch gekennzeichnet, dass** die Tragplatte (16) eine Befestigungsplatte (24) mit nach oben weisenden Flanschen (36) umfaßt, an denen die elektrischen Komponenten (41, 44, 46, 48) angebracht sind.

4. Vorrichtung nach einem der Ansprüche 1 bis 3, **dadurch gekennzeichnet, dass** die Tragplatte (16) an einem lenkgesteuerten Förderzeug an dem Ende angebracht werden kann, welches der Bedienungsperson zugewandt liegt, und in einer solchen Weise, dass die Steuereinrichtungen oder die Einrichtungen (52, 56, 58, 60, 62), welche durch eine Bedienungsperson bedienbar sind, und gegebenenfalls Sichtanzeigeeinrichtungen (54) auf einer Seite der Tragplatte (16) angeordnet sind, die der Bedienungsperson zugewandt liegt, und dass die anderen Komponenten (40, 42, 44, 46, 48, 50) in gestützter Weise auf einer Seite der Tragplatte (16) angeordnet sind, die von der Bedienungsperson abgewandt liegt.

5. Vorrichtung nach einem der Ansprüche 1 bis 4, **dadurch gekennzeichnet, dass** die Tragplatte (16) und eine Lagerung (9) für das Förderzeug (8) auf dem Fahrgestell (2) eines lenkgesteuerten Förderzeugs zwischen dem Platz für die Bedienungsperson und der Lastaufnahmeeinrichtung (3) anordenbar sind, und dass eine Batterieeinheit auf jeder Seite (6) angegebenen Lagerung (9) angeordnet werden kann.

6. Vorrichtung nach einem der Ansprüche 1 bis 5, **dadurch gekennzeichnet, dass** die Tragplatte (16) auf einfache Weise lösbar an dem Fahrgestell beispielsweise mittels einer einfachen Schraubverbindung (28, 30) angeordnet werden kann und durch eine oder mehrere einfach gestaltete, lösbar angeordnete Verkleidungsteile (14) umgeben ist, welche Öffnungen oder Ausnehmungen haben, welche einen Zugang zu den Steuerungen oder den Einrichtungen (52, 56, 58, 60, 62) gestatten, die durch eine Bedienungsperson bedienbar sind, sowie welche gegebenenfalls vorgesehene Sichtanzeigeeinrichtungen (54) zugänglich sind.

7. Vorrichtung nach Anspruch 6, **dadurch gekennzeichnet, dass** die Tragplatte (16) eine Abdeckplatte (26) umfaßt, die mit ihren Verkleidungsteilen (44) zusammenarbeiten kann, um der Anordnung eine ästhetische äußere Form zu verleihen.

8. Vorrichtung nach einem der Ansprüche 6 oder 7, **dadurch gekennzeichnet, dass** die Tragplatte (16) derart angeordnet ist, dass ein Zugang zu der elektrischen Komponente zu Wartungszwecken, zur Reparatur und zum Service sowie zu den restlichen elektrischen Kontakten möglich ist, so dass alle Funktionen beibehalten werden, wenn die Verkleidungsteile (14) abgenommen sind.

## Revendications

1. Dispositif comprenant des composants électriques pour un chariot de manutention entraîné par un moteur électrique, dans lequel la majeure partie de tous les composants électriques (40, 41, 42, 44, 46, 48, 50), comprenant au moins une unité de commande (42) pour un moteur d'entraînement, est agencée sur un panneau de support commun (16), sur lequel au moins un des moyens ou des commandes manoeuvrables par un opérateur (52, 56, 58, 60, 62) ainsi qu'un verrou de démarrage (60) et un interrupteur d'arrêt d'urgence (62) et/ou un contact de charge (58) sont également directement agencés, **caractérisé en ce qu'**un chargeur de batterie (40) est également disposé sur le panneau de support (16).

2. Dispositif selon la revendication 1, **caractérisé en ce que** le chargeur de batterie (40), l'unité de commande (42) pour le moteur d'entraînement, un contact principal (46), un contact (48) pour un dispositif de levage, un avertisseur sonore (50), un fusible principal (44), un moyen de couplage pour la réception d'un signal provenant d'un moyen de commande tel qu'un bras de timon, le verrou de démarrage (60), l'interrupteur d'arrêt d'urgence (62) et le contact de charge (52) sont disposés directement sur le panneau de support.

3. Dispositif selon l'une quelconque des revendications 1 ou 2, **caractérisé en ce que** le panneau de support (16) comprend le panneau de fixation (24) avec des brides retournées (36) sur lesquelles des composants électriques (41, 44, 46, 48, 50) sont montés.

4. Dispositif selon l'une quelconque des revendications 1 à 3, **caractérisé en ce que** le panneau de support (16) peut être agencé sur un chariot à timon de commande à l'extrémité faisant face à la place de l'opérateur et de manière à ce que les moyens ou les commandes (52, 56, 58, 60, 62) manoeuvrables par l'opérateur et les possibles moyens d'indication visuelle (54) soient agencés sur un côté du panneau de support (16) faisant face à la place de l'opérateur et à ce que les autres composants (40, 42, 44, 46, 48, 50) soient agencés de manière protégée sur un côté du panneau de support (16) tourné à l'opposé de la place de l'opérateur.

5. Dispositif selon l'une quelconque des revendications 1 à 4, **caractérisé en ce que** le panneau de support (16) et un tourillon (9) pour le timon de commande (8) puissent être agencés sur le châssis (2) d'un chariot à timon de commande entre la place de l'opérateur et le moyen de prise de charge (3) et **en ce qu'**une unité de batterie puisse être agencée de chaque côté (6) du tourillon mentionné (9).

6. Dispositif selon l'une quelconque des revendications 1 à 5, **caractérisé en ce que** le panneau de support (16) peut être simplement agencé de manière amovible sur le châssis, par exemple par une simple connexion par vis (28, 30), et entouré d'un ou de plusieurs éléments de capot facilement amovibles (14) munis d'ouvertures ou d'évidements pour permettre l'accès aux moyens, ou commandes (52, 56, 58, 60, 62) manoeuvrables par l'opérateur et aux possibles moyens d'indication visuelle (54).

7. Dispositif selon la revendication 7,
**caractérisé en ce que** le panneau de support (16) comprend un panneau protecteur (26) qui peut coopérer avec les éléments de capot (14) pour obtenir une forme externe esthétique.

8. Dispositif selon l'une quelconque des revendications 6 ou 7, **caractérisé en ce que** le panneau de support (16) est agencé de manière à ce que l'accès aux composants électriques, pour maintenance, réparation et entretien soit possible avec les contacts électriques restants, de manière à ce que toutes les fonctions restent actives lorsque les éléments de capot (14) sont retirés.
